# FASCICULE DE BREVET EUROPEEN

(11) **EP 3 563 908 B1**
(45) Date de publication et mention de la délivrance du brevet: **12.06.2024**
(21) Numéro de dépôt: 19170013.7
(22) Date de dépôt: 18.04.2019
(51) Int. Cl.: A63B 3/00, A63B 1/00, A63B 71/06

(54) **EQUIPEMENT SPORTIF COMPRENANT UN HAUBAN ET UN APPAREIL DE MESURE FIXÉ AU HAUBAN**
SPORTAUSRÜSTUNG, DIE EIN SPANNSEIL UND EIN AN DIESEM SPANNSEIL BEFESTIGTES MESSGERÄT UMFASST
SPORTS EQUIPMENT COMPRISING A TENSION BAND AND A MEASURING DEVICE ATTACHED TO THE TENSION BAND

(30) Priorité: 30.04.2018 FR 1800403
(43) Date de publication de la demande: 06.11.2019
(73) Titulaire: JFS B.V., 5709 AE Helmond (NL)
(72) Inventeur: LLOYD, Alberts, HELMOND (NL)
(74) Mandataire: Santarelli

(56) Documents cités:
- WO-A1-2005/075286
- CA-A1- 2 917 368
- GB-A- 1 403 132
- US-A- 3 466 024
- US-A- 4 687 194

## Description

La présente invention porte sur le domaine des équipements destinés à la pratique d'un sport. Elle porte notamment sur les agrès de gymnastique. Elle s'applique en particulier aux équipements sportifs dont la stabilité ou la rigidité est assurée à l'aide d'un ou plusieurs haubans tendus entre ledit appareil et un point fixe, par exemple au sol ou entre les parties dudit équipement.

Plus particulièrement, la présente invention concerne un équipement sportif comprenant un hauban auquel est fixé un appareil de mesure.

On entend par équipement sportif toute installation adaptée à la pratique sportive.

Classiquement, certains équipements sportifs comprennent des haubans pouvant avoir diverses fonctions. Les haubans peuvent être utilisés afin d'assurer la stabilité entre différents éléments de l'équipement sportif mais également afin de garantir l'ancrage au sol de l'équipement sportif.

Le terme hauban désigne de manière générale un câble, une chaîne ou un cordage mis en tension et permettant le maintien et le renforcement d'un dispositif.

Quelle que soit la fonction jouée par le hauban dans un équipement sportif, il est important de s'assurer qu'il est convenablement tendu. En effet, le hauban a un impact sur l'équilibre et la stabilité de l'équipement sportif et par conséquent sur la sécurité de l'utilisateur.

On entend par tension du hauban la contrainte de traction qu'il subit lorsqu'il est soumis à ses extrémités à deux forces dirigées dans sa direction d'extension, vers l'extérieur c'est-à-dire tendant à étirer ledit hauban. Elle est généralement exprimée en newtons (N).

Il est connu de l'art antérieur des dispositifs de contrôle de tension pouvant être disposés à la surface du hauban de l'équipement sportif afin de mesurer sa tension puis retirés une fois la mesure effectuée. Cela présente le désavantage d'être fastidieux et de ne pas permettre un contrôle à tout instant de la tension du hauban. La sécurité de l'utilisateur n'est donc pas toujours garantie. De plus, si le dispositif de contrôle présente une masse trop importante, cela peut entrainer une imprécision dans la mesure de la tension du hauban.

Par ailleurs, outre l'aspect sécuritaire, l'utilisateur de l'équipement sportif peut souhaiter modifier la tension du hauban à sa convenance selon par exemple l'exercice effectué ou l'objectif visé. En effet, la tension appliquée dans les haubans modifie la réponse dynamique de l'équipement, et donc le ressenti de l'utilisateur lors d'un exercice. En outre, il peut être souhaitable d'adapter, de manière fiable, la tension à la morphologie de l'utilisateur. Or, les dispositifs de l'art antérieur rendent la vérification de la tension fastidieuse et compliquée à mettre en oeuvre notamment lorsque l'utilisateur est souvent amené à modifier la tension du hauban ou que plusieurs utilisateurs utilisent à tour de rôle l'équipement.

Une solution simple permettant d'obtenir une information représentative de la tension du hauban de manière simple, rapide et précise est donc souhaitable.

La présente invention a pour but de résoudre au moins l'un des inconvénients précités avec un équipement sportif tel que défini dans la revendication 1.

Ainsi, l'invention porte sur un équipement sportif comprenant un hauban auquel est appliqué une tension mécanique et qui assure la stabilité ou la rigidité de l'équipement sportif. Selon l'invention, l'équipement sportif comporte un appareil de mesure qui est fixé au hauban de sorte que la tension du hauban lui est appliquée, l'appareil de mesure comprenant un capteur adapté à délivrer un signal électrique correspondant à une information représentative de la tension du hauban.

L'appareil de mesure étant fixé en permanence au hauban, cela permet d'obtenir une information représentative de la tension du hauban à tout moment. Cela permet ainsi à l'utilisateur de modifier la tension du hauban à sa convenance tout en assurant sa sécurité. En outre, dans la mesure où la tension est appliquée à l'appareil de mesure, en ce sens que la force de traction du hauban s'applique directement à l'appareil de mesure, ce dernier peut fournir une information fiable sur ladite tension.

L'appareil de mesure peut comprendre un afficheur adapté à indiquer l'information représentative de la tension du hauban.

L'afficheur ainsi intégré à l'appareil de mesure permet à l'utilisateur d'obtenir rapidement l'information représentative de la tension du hauban.

L'appareil de mesure peut comprendre un port de connexion permettant le branchement d'un afficheur adapté à indiquer l'information représentative de la tension du hauban.

L'appareil de mesure peut comprendre un système de transmission sans fil de l'information représentative de la tension du hauban à destination d'un afficheur.

L'équipement sportif peut comporter un afficheur communiquant avec l'appareil de mesure de sorte à indiquer l'information représentative de la tension.

La formation d'un port de connexion et l'intégration d'un système de transmission sans fil multiplient les possibilités de types d'afficheurs pouvant être utilisés avec l'appareil de mesure. Cela permet donc à l'utilisateur d'avoir un appareil de mesure adapté et adaptable à son besoin, selon par exemple le type d'information représentative de la tension qu'il souhaite obtenir.

Le système de transmission sans fil peut également permettre d'afficher les informations de plusieurs appareils de mesure simultanément ou alternativement sur un même afficheur.

L'afficheur peut être configuré pour fournir une valeur numérique de la tension du hauban.

L'appareil de mesure peut comporter un dispositif de stockage de données adapté à stocker l'information représentative de la tension du hauban.

Le stockage de l'information représentative permet à l'utilisateur d'exploiter ultérieurement les données mesurées par exemple à des fins statistiques ou pour s'assurer du bon ancrage du hauban.

L'appareil de mesure peut comprendre un dispositif d'alerte adapté à émettre un signal d'alerte lorsque la valeur de la tension du hauban sort d'une plage prédéfinie.

Le signal d'alerte, pouvant être par exemple visuel ou sonore, constitue pour l'utilisateur un moyen d'alerte rapidement détectable lors du dépassement pour la tension du hauban d'une plage prédéfinie. Selon les critères de définition de la plage de tension, cette caractéristique peut permettre d'assurer la sécurité de l'utilisateur ou tout simplement le confort d'utilisation qu'il recherche.

L'appareil de mesure peut comprendre au moins une batterie permettant d'assurer son fonctionnement, l'appareil de mesure comprenant une diode électroluminescente adaptée à indiquer l'état de ladite au moins une batterie.

La diode électroluminescente constitue un signal rapidement repérable par l'utilisateur évitant ainsi à ce dernier de devoir vérifier régulièrement l'état de la batterie de l'appareil de mesure.

L'invention porte également sur un équipement sportif comprenant plusieurs haubans et comportant un appareil de mesure, tel que précédemment décrit, par hauban.

D'autres particularités et avantages de l'invention apparaîtront encore dans la description ci-après.

Aux dessins annexés, donnés à titre d'exemples non limitatifs :
- la figure 1 représente une vue de barres asymétriques munies de haubans et comprenant un appareil de mesure fixé à l'un des haubans, constituant ainsi un équipement sportif selon un mode de réalisation conforme à l'invention ;
- la figure 2 représente une vue de détail de l'appareil de mesure de la figure 1 ;
- la figure 3 représente une vue de détail, analogue à celle de la figure 2, de l'appareil de mesure selon un autre mode de réalisation conforme à l'invention ; et
- la figure 4 représente une vue de détail, analogue à celle des figures 2 et 3, de l'appareil de mesure selon un autre mode de réalisation conforme à l'invention.

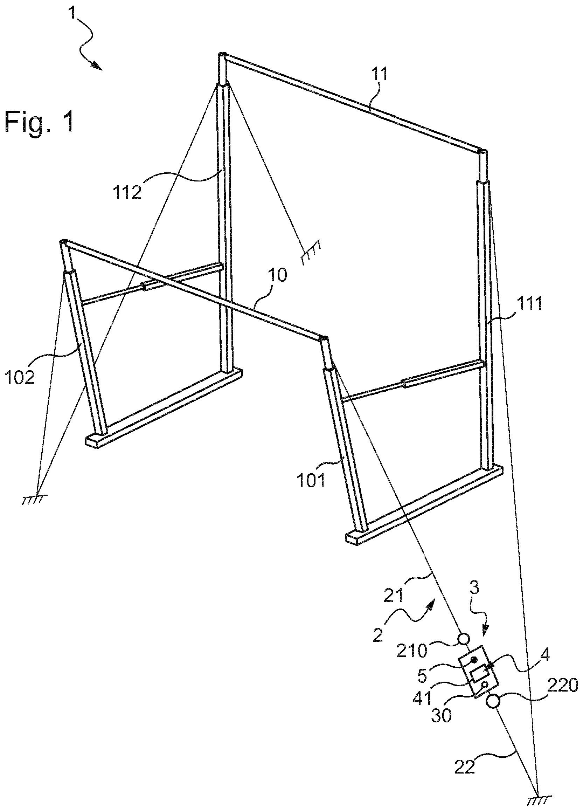

La figure 1 représente un équipement sportif 1, à savoir des barres asymétriques de gymnastique, comprenant des haubans. Bien entendu, la présente description réalisée pour des barres asymétriques reste valable pour tout autre type d'équipement sportif doté d'au moins un hauban.

Les barres asymétriques 1 comportent ici une barre inférieure 10 et une barre supérieure 11. Deux montants inférieurs 101, 102 et deux montants supérieurs 111, 112 sont respectivement disposés de part et d'autre de la barre inférieure 10 et de la barre supérieure 11. Les montants inférieurs et supérieurs permettent de soutenir les barres inférieure 10 et supérieure 11.

Afin d'assurer la stabilité et le bon ancrage au sol des barres asymétriques 1, des haubans sont attachés aux montants inférieurs 101, 102 et aux montants supérieurs 111, 112. Bien entendu, les barres asymétriques 1 peuvent être haubanées avec des haubans disposés selon d'autres configurations.

La suite de la description est réalisée relativement au hauban 2 attaché au montant inférieur 101.

Un appareil de mesure 3 est fixé au hauban 2. L'appareil de mesure 3 est adapté à délivrer une information relative à la tension du hauban. L'information délivrée peut être toute information représentative donnant un renseignement sur la tension du hauban. Il s'agit d'une information pertinente dans le but d'aider l'utilisateur de l'équipement sportif dans sa pratique sportive. L'information représentative peut ainsi être la valeur exacte de la tension du hauban, une information quant au fait que la valeur de la tension est comprise dans une plage prédéfinie, une indication de l'état de tension du hauban (tendu, lâche), une indication sur l'ancrage et/ou la stabilité de l'équipement sportif, ou toute autre information quant à la tension dans le hauban.

Bien entendu, l'utilisation du singulier pour « information représentative » ne doit pas être comprise de façon restrictive dans la mesure où l'appareil de mesure 3 peut délivrer plusieurs informations sur la tension du hauban, simultanément ou successivement.

Selon l'exemple de réalisation illustré, le hauban 2 comprend une première partie 21 et une deuxième partie 22. La première partie 21 et la deuxième partie 22 comprennent respectivement à l'une de leur extrémité un premier point d'attache 210 et un deuxième point d'attache 220. L'appareil de mesure 3 est fixé d'une part à la première partie 21 du hauban 2 au niveau du premier point d'attache 210, et d'autre part à la deuxième partie 22 du hauban 2 au niveau du deuxième point d'attache 220. La tension du hauban 2 est ainsi appliquée à l'appareil de mesure 3. En d'autres termes, l'appareil de mesure 3 se voit appliquer directement la force de traction, ou tension, appliquée par le hauban 2 à l'équipement sportif.

Comparativement aux appareils de mesure connus dans l'art antérieur et qui sont disposés sur le hauban, l'appareil de mesure 3 est utilisable rapidement à tout moment et pour toute sorte d'équipement sportif haubané. A titre d'exemple, l'appareil de mesure 3 peut être utilisé pour un équipement sportif ayant des haubans revêtus par une gaine, sans que la précision de la mesure ne soit affectée par la présence de la gaine. En effet, puisque l'appareil de mesure 3 n'est pas disposé sur le hauban gainé mais plutôt accroché à ce dernier de sorte que la tension du hauban lui est appliquée directement et en totalité, les mesures de tension peuvent être réalisées sans que cela n'ait de conséquence sur l'exactitude des mesures.

L'appareil de mesure 3 peut bien entendu être fixé autrement au hauban 2. A titre d'exemple, le hauban 2 peut être constitué d'une seule partie et l'appareil de mesure est alors fixé à une extrémité du hauban. Ainsi, l'appareil de mesure peut être fixé d'une part au hauban et d'autre part à une ancre, ou point fixe, permettant l'ancrage au sol du hauban. Alternativement, l'appareil de mesure peut être attaché d'une part au hauban 2, et d'autre part au montant inférieur 101 (ou, plus généralement, directement en un point de liaison avec l'équipement sportif).

L'appareil de mesure 3 comprend un capteur adapté à délivrer un signal électrique brut représentatif de la tension du hauban 2. A titre non limitatif, le signal électrique comporte un certain nombre de grandeurs dont la valeur ou la variation peut traduire la tension du hauban, notamment : une tension électrique, une intensité de courant ou une variation de fréquence si le signal n'est pas continu.

Pour un appareil de mesure électronique tel qu'illustré dans les modes de réalisation des figures, le capteur (non représenté) peut être un capteur de force adapté à traduire la tension du hauban en un signal électrique. Le capteur de force peut être une jauge de déformation, également appelée jauge de contrainte. Le signal électrique brut du capteur peut être acquis par un microcontrôleur ou tout autre dispositif de traitement adapté à lire ledit signal électrique brut du capteur de force afin de générer un signal de sortie. Le signal de sortie correspond à l'information représentative de la tension du hauban. Afin de simplifier le traitement du signal, un conditionneur peut être utilisé entre le capteur de force et le dispositif de traitement.

Le caractère électronique du dispositif permet d'obtenir un appareil de mesure compact. En effet, comparé à un appareil de mesure mécanique nécessitant généralement l'utilisation d'éléments tels que des ressorts dont la longueur est modifiée en fonction de la tension qui leur est appliquée, l'appareil de mesure 3 est compact et présente d'une part de petites dimensions et d'autres part des dimensions invariables quelle que soit la tension mécanique qui lui est appliquée. L'appareil de mesure 3 est ainsi peu volumineux et peu encombrant.

Par ailleurs, l'appareil de mesure 3 étant un appareil électronique, c'est à dire ayant un capteur adapté à délivrer un signal électrique, l'information représentative peut être plus précise comparativement à un appareil de mesure mécanique.

Le dispositif ici représenté comprend un afficheur 4 adapté à recevoir le signal de sortie correspondant à l'information relative à la tension dans le hauban, et à indiquer cette information représentative de la tension du hauban 2. On entend par « afficheur » tout moyen permettant d'afficher l'information sur la tension du hauban, notamment selon les exemples mentionnés ci-après.

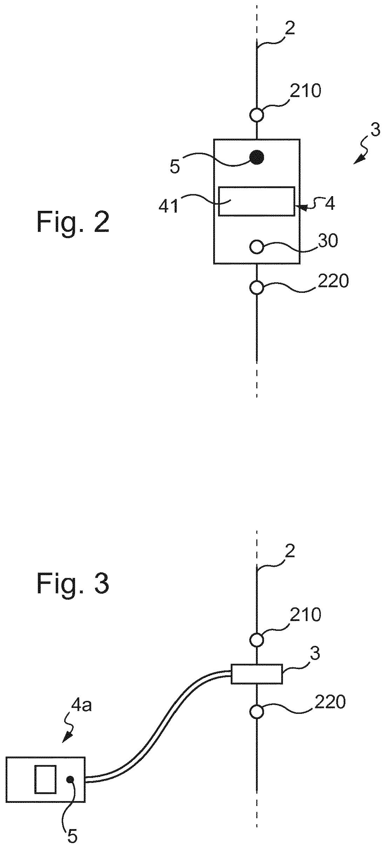

Comme visible à la figure 2, l'appareil de mesure 3 comprend, dans l'exemple de mode de réalisation ici représenté, un bouton 30. Le bouton 30 est ici un bouton marche/arrêt adapté à allumer et à éteindre l'appareil de mesure 3. Lorsque le bouton 30 est enclenché, le capteur, le microcontrôleur et l'afficheur sont allumés et la tension du hauban peut être mesurée puis affichée au moins pour une certaine durée.

Selon l'exemple de réalisation illustré aux figures 1 et 2, l'afficheur 4 est intégré à l'appareil de mesure 3. L'afficheur 4 comprend ici un écran 41 adapté à afficher l'information représentative de la tension du hauban 2. L'information affichée peut être une valeur numérique, une indication d'état telle que « tendu » ou « lâche », un code signifiant à l'utilisateur que le hauban est suffisamment tendu ou pas par rapport à une norme ou relativement à un réglage préalable de l'utilisateur, une couleur ayant une signification (par exemple le vert pour un hauban correctement tendu, le orange pour une tension basse ou élevée, le rouge pour un hauban insuffisamment ou trop tendu), une représentation graphique de la tension dans une plage de tension admissible, etc. L'écran 41 est de préférence de dimension suffisamment grande afin de permettre une lecture simple et rapide de l'information sur la tension du hauban 2.

Le caractère électronique du dispositif permet d'obtenir par le même appareil de mesure une grande diversité dans le type d'information représentative délivrée, par exemple la mesure de la tension du hauban, l'état de tension (par exemple bien tendu, pas assez tendu) du hauban 2, etc.

En outre, l'appareil de mesure 3 est ergonomique puisque l'utilisateur obtient sur l'afficheur une information représentative pertinente et immédiatement interprétable. On entend par « interprétable » une information pouvant être interprétée sans demander un calcul ou une évaluation poussée de la part de l'utilisateur (ce qui est souvent nécessaire avec les appareils de mesure mécaniques) outre la simple lecture de ladite information représentative.

Bien entendu, plusieurs alternatives peuvent être envisagées pour l'afficheur 4. L'afficheur peut être un cadran à aiguille ou un afficheur digital tel qu'un afficheur fluorescent, ou à segments, à diodes électroluminescentes, etc.

La figure 3 illustre un deuxième mode de réalisation conforme à l'invention. Dans cet exemple de réalisation, l'appareil de mesure 3 comprend un port de connexion auquel est destiné à être branché un afficheur 4a.

L'afficheur 4a peut être un afficheur classique tel que ceux cités pour l'afficheur 4 intégré à l'appareil de mesure. Alternativement, l'afficheur 4a peut être un appareil électronique tel qu'un appareil mobile du type smartphone ou une tablette. Dans le cas où plusieurs haubans d'un même équipement sportif, ou de plusieurs équipements sportifs, sont équipés d'un appareil de mesure de la tension, cela permet une lecture de la tension dans chaque hauban par branchements successifs audits appareils de mesure. La compacité et la discrétion de l'ensemble sont améliorées, et le coût total d'équipement des haubans est réduit.

Selon un autre mode de réalisation pouvant être alternatif ou complémentaire aux modes de réalisation précédemment décrits, l'appareil de mesure 3 comprend un système de transmission sans fil.

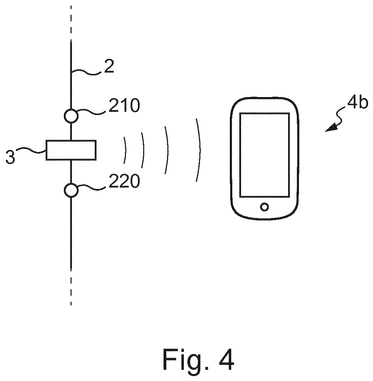

La figure 4 représente un mode de réalisation dans lequel la communication entre l'appareil de mesure 3 et un afficheur 4b est réalisée uniquement via un réseau sans fil. Le système de transmission sans fil est adapté à transmettre l'information représentative de la tension du hauban 2 à destination d'un afficheur 4b. On entend par système de transmission sans fil tout système de communication à distance utilisant par exemple des technologies connues telles que le Bluetooth^{™}, ZigBee^{™}, le Wi-Fi^{™}, ou tout autre protocole de communication sans fil adapté.

L'afficheur 4b comprend des moyens de réception correspondants, lui permettant d'acquérir l'information représentative de la tension du hauban 2 en provenance d'un ou plusieurs appareils de mesure 3.

Tout comme dans le cadre de la communication filaire du mode de réalisation de la figure 3, la communication peut être bidirectionnelle, en ce que l'afficheur peut transmettre des informations de paramétrage à l'appareil de mesure. Le paramétrage peut comporter la définition d'une plage de tension admissible.

L'afficheur 4b peut être un dispositif dédié ou un appareil mobile tel qu'une tablette (comme dans l'exemple représenté à la figure 4), un ordinateur, ou un smartphone. Le dispositif est contrôlé par l'utilisateur qui peut le paramétrer par exemple via une application informatique.

Quel que soit le mode d'affichage et de communication entre l'appareil de mesure 3 et l'afficheur 4, le dispositif peut laisser à l'utilisateur la possibilité de choisir une plage de tension préférentielle voire une tension préférentielle, choisir une marge d'erreur à la plage de tension ou à la tension préférentielles avant le déclenchement d'un signal d'alerte, inclure une tension de référence dépendant par exemple d'une norme, choisir l'unité de lecture de la tension, etc. A cette fin, le dispositif peut être doté de commandes, tel qu'un curseur ou un bouton rotatif au niveau de l'appareil de mesure, ou de commandes physiques ou virtuelles au niveau de l'afficheur.

En outre, plusieurs afficheurs 4, 4a, 4b de type différents et communiquant différemment avec l'appareil de mesure (afficheur intégré, port de connexion, transmission sans fil) peuvent être utilisés pour un même hauban. Dans ce cas, les informations représentatives indiquées par les afficheurs peuvent être similaires ou différentes et peuvent être indiquées simultanément ou successivement.

Pour un appareil de mesure 3 électronique, au moins une source d'énergie est nécessaire à son fonctionnement. Une batterie peut notamment être employée. Un port d'alimentation est ainsi prévu pour alimenter ladite batterie en électricité. L'appareil de mesure 3 possède ainsi une autonomie liée à la capacité de la batterie, lui permettant de fonctionner sans être constamment alimenté en courant électrique.

Selon l'exemple de réalisation illustré à la figure 2, l'afficheur 4a comprend une diode électroluminescente 5. La diode électroluminescente 5 est adaptée à indiquer l'état de la batterie de l'appareil de mesure 3. Lorsque la batterie descend en-dessous d'un certain seuil, par exemple 10%, la diode électroluminescente s'allume afin d'indiquer à l'utilisateur qu'il doit recharger l'appareil de mesure 3. Lorsque la batterie arrive à un seuil très bas, par exemple 2%, la diode électroluminescente clignote. Bien évidemment, selon la technologie d'afficheur employée, l'information de faible charge de la batterie peut être indiquée de diverses façons : apparition d'un pictogramme, d'un indicateur visuel tel qu'une couleur, déclenchement d'un signal sonore si l'afficheur ou l'appareil de mesure est doté d'un dispositif d'émission sonore. De plus, lorsque l'afficheur utilisé est par exemple un smartphone ou une tablette, une information sur le niveau de charge de la batterie peut être indiquée directement sur l'écran de l'afficheur par exemple par l'indication d'un pourcentage ou au moyen d'une icône affichant le taux de charge ainsi que l'autonomie maximum par exemple. L'indication de l'information sur le niveau de charge sur l'écran de l'afficheur peut être effectuée en complément d'un moyen d'indication de faible charge tel que décrit précédemment.

L'équipement sportif objet de l'invention peut comprendre des dispositifs de stockage (non représentés) de données, comportant une mémoire informatique, adaptés à stocker l'information représentative de la tension du hauban 2. Cela permet de garder en mémoire les informations sur la tension du hauban, rendant possible de consulter ces informations ultérieurement.

Les dispositifs de stockage de données peuvent être soit intégrés à l'appareil de mesure, soit être compris dans l'afficheur, par exemple dans les dispositifs pouvant être associés à l'appareil de mesure tel qu'un ordinateur, un smartphone ou encore une tablette.

Il est par exemple ainsi possible de garder en mémoire la tension du hauban 2 afin de pouvoir évaluer dans le temps l'évolution de l'état du hauban 2 et ainsi décider par exemple de son remplacement. Le stockage des données sur la tension du hauban peut également être utilisé à des fins statistiques, par exemple pour évaluer la durée de vie d'un hauban.

De manière générale, un dispositif d'affichage et/ou de traitement de données peut être connecté avec ou sans fil à l'appareil de mesure. Les données relatives à la tension du hauban peuvent ainsi être traitées, affichées, stockés, partagées etc. Les données peuvent être combinées. Elles peuvent être affichées de diverses manières.

L'appareil de mesure employé dans l'invention permet de délivrer différents types d'information selon ce qui est souhaité par l'utilisateur. L'utilisation de dispositifs dédiés et notamment d'applications informatiques programmables offre une flexibilité à l'utilisateur. Cela permet d'obtenir des informations pertinentes et adaptables au besoin de chaque utilisateur.

La présente description est réalisée pour un appareil de mesure fixé à un hauban. Bien entendu, pour un équipement sportif comprenant plusieurs haubans, un appareil de mesure peut être fixé sur chaque hauban.

Dans le cas de la fixation respective de plusieurs appareils de mesure à plusieurs haubans, un afficheur commun peut être utilisé pour tous les appareils de mesure. L'afficheur commun peut être lié aux appareils de mesure de manière filaire, ou via un système de communication sans fil. L'utilisateur a la possibilité par exemple de sélectionner un hauban particulier dont il souhaite obtenir la tension. L'afficheur commun permet également de sélectionner plusieurs haubans et ainsi comparer les différentes tensions. L'afficheur peut comporter une interface qui représente, sur un seul écran, la tension des différents haubans équipés.

Le partage d'information avec des dispositifs tels qu'un afficheur dédié ou autre dispositif électronique est particulièrement intéressant si la stabilité de l'équipement est contrôlée par une personne tierce, autre que l'utilisateur, par exemple une personne ayant pour fonction de contrôler tous les équipements d'un local sportif. Cela permet de réaliser des mesures et des contrôles rapides et fiables.

Bien entendu, la présente invention n'est pas limitée aux modes de réalisation décrits ci-avant. En particulier, les fonctionnalités de l'appareil de mesure notamment liées aux afficheurs et dispositifs dédiées ne sont pas limitées à celles précédemment décrites.

A titre d'exemples non limitatifs, l'appareil de mesure peut comprendre un dispositif d'alerte adapté à émettre un signal d'alerte lorsque la valeur de la tension du hauban sort d'une plage prédéfinie. La plage prédéfinie est par exemple choisie par l'utilisateur ou réglée par défaut sur des valeurs normalisées. La plage prédéfinie dépend par exemple de la disposition des haubans.

Le signal d'alerte peut être un signal sonore ou visuel. Ainsi, une diode électroluminescente qui s'allume ou un bip sonore peuvent par exemple alerter l'utilisateur lorsque la tension du hauban sort de la plage prédéfinie. Le signal d'alerte peut être un signal électronique émis à destination de l'afficheur (intégré, ou relié de manière filaire ou sans fil), de sorte que ledit afficheur émette un signal visuel ou sonore.

Afin d'économiser la batterie de l'appareil de mesure, ce dernier peut s'éteindre automatiquement à partir d'un certain laps de temps, par exemple de l'ordre de trente secondes après avoir affiché la valeur de la tension du hauban.

L'invention est illustrée par un équipement sportif, à savoir des barres asymétriques, liées au sol ou à des points fixes tels que des lests (tels que des plots en béton ou métalliques) posés au sol. Des haubans peuvent également être employés pour assurer la rigidité d'un équipement sportif, en liant différents points dudit élément. Par exemple, des haubans peuvent éviter une déformation excessive des éléments constituant ledit équipement sportif.

A titre non limitatif, on peut citer parmi les équipements sportifs pouvant faire l'objet de l'invention : les agrès de gymnastique (barre fixe, barres asymétriques, portique pour anneaux, cheval d'arçon, table de saut), les équipements de saut en athlétisme, les équipements de certains sports collectifs (paniers de basketball, filets de volleyball, filets de tennis), ou tout autre équipement sportif dont les dimensions ou la constitution nécessite l'emploi de haubans.

L'invention propose ainsi un équipement sportif comprenant au moins un hauban et un appareil de mesure permettant de délivrer une information représentative de la tension du hauban de façon simple et rapide.

L'appareil de mesure ainsi développé est léger, ce qui permet de le fixer au hauban sans fausser les mesures de tension et sans influencer significativement le comportement dynamique de l'agrès qui en est équipé. L'appareil de mesure électronique employé dans l'invention peut présenter de petites dimensions ainsi qu'une masse très faible, insusceptible de perturber la réponse mécanique des haubans.

La présente invention est également particulièrement intéressante pour les sportifs souhaitant reproduire des conditions particulières d'exercice, par exemple pour s'exercer plusieurs fois dans les mêmes conditions, c'est-à-dire en ajustant la tension des haubans de sorte à ce qu'elle soit toujours la même. L'utilisateur d'un équipement sportif conforme à l'invention peut notamment être associé à un profil utilisateur comportant les valeurs de tension souhaitées dans les haubans, de sorte à régler ces tensions en correspondance avec ledit profil.

La présente invention est également particulièrement intéressante pour les équipements de gymnastique ayant des haubans pour lesquels il est important de maintenir la tension des haubans permettant un entrainement convenable aux gymnastes tout en assurant leur sécurité.

Du fait de la nature électronique de l'appareil de mesure, de nombreuses prestations peuvent être offertes par un équipement sportif conforme à l'invention : stockage en mémoire des mesures réalisées, définition de profils d'utilisateurs, possibilité de contrôler fréquemment, rapidement et de manière fiable les équipements comportant l'appareil de mesure, possibilité d'un affichage déporté voire mutualisé pour plusieurs capteurs, faible coût de mise en oeuvre.

## Revendications

1. Equipement sportif comprenant un hauban (2) auquel est appliqué une tension mécanique et qui assure la stabilité ou la rigidité dudit équipement sportif, **caractérisé en ce qu'**il comporte un appareil de mesure (3) qui est fixé audit hauban (2) de sorte que la tension du hauban (2) lui est appliquée, ledit appareil de mesure (3) comprenant :
- un capteur adapté à délivrer un signal électrique correspondant à une information représentative de la tension du hauban ; et
- un dispositif de traitement adapté à lire ledit signal électrique du capteur afin de générer un signal de sortie, le signal de sortie étant reçu par un afficheur (4, 4a, 4b) intégré ou communiquant avec l'appareil de mesure (3) et configuré pour indiquer ladite information représentative de la tension dans le hauban.

2. Equipement sportif conforme à la revendication 1, dans lequel l'appareil de mesure (3) comprend un afficheur (4) adapté à indiquer ladite information représentative de la tension du hauban (2).

3. Equipement sportif conforme à la revendication 1 ou la revendication 2, dans lequel l'appareil de mesure (3) comprend un port de connexion permettant le branchement d'un afficheur (4a) adapté à indiquer l'information représentative de la tension du hauban (2).

4. Equipement sportif conforme à l'une des revendications précédentes, dans lequel l'appareil de mesure (3) comprend un système de transmission sans fil de l'information représentative de la tension du hauban (2) à destination d'un afficheur (4b).

5. Equipement sportif conforme à la revendication 3 ou la revendication 4, comportant un afficheur (4a,4b) communiquant avec l'appareil de mesure de sorte à indiquer l'information représentative de la tension.

6. Equipement sportif conforme à la revendication 2 ou la revendication 5, dans lequel l'afficheur (4,4a,4b) est configuré pour fournir une valeur numérique de la tension du hauban (2).

7. Equipement sportif conforme à l'une des revendications précédentes, dans lequel ledit appareil de mesure (3) comporte un dispositif de stockage de données adapté à stocker ladite information représentative de la tension du hauban (2).

8. Equipement sportif conforme à l'une des revendications précédentes, dans lequel ledit appareil de mesure (3) comprend un dispositif d'alerte adapté à émettre un signal d'alerte lorsque la valeur de la tension du hauban (2) sort d'une plage prédéfinie.

9. Equipement sportif conforme à l'une des revendications précédentes, dans lequel l'appareil de mesure (3) comprend au moins une batterie permettant d'assurer son fonctionnement, l'appareil de mesure (3) comprenant une diode électroluminescente (5) adaptée à indiquer l'état de ladite au moins une batterie.

10. Equipement sportif conforme à l'une des revendications précédentes et comprenant plusieurs haubans (2), comportant un appareil de mesure (3) par hauban (2).

## Patentansprüche

1. Sportausrüstung, umfassend ein Spannseil (2), an dem eine mechanische Spannung angelegt ist, und welches für die Stabilität und die Festigkeit der Sportausrüstung sorgt,
**dadurch gekennzeichnet, dass** es ein Messgerät (3) beinhaltet, das an dem Spannseil (2) fixiert ist, sodass die Spannung des Spannseils (2) daran angelegt wird, wobei das Messgerät (3) umfasst:
- einen Sensor, der angepasst ist, um ein elektrisches Signal abzugeben, das einer für die Spannung des Spannseils repräsentativen Information entspricht; und
- eine Verarbeitungsvorrichtung, die angepasst ist, um das elektrische Signal des Sensors zu lesen, um ein Ausgangssignal zu generieren, wobei das Ausgangssignal von einer Anzeige (4, 4a, 4b) empfangen wird, die in das Messgerät (3) integriert ist, oder damit kommuniziert, und konfiguriert ist, um die für die Spannung des Spannseils repräsentative Information anzuzeigen.

2. Sportausrüstung nach Anspruch 1, wobei das Messgerät (3) eine Anzeige (4) umfasst, die angepasst ist, um die für die Spannung des Spannseils (2) repräsentative Information anzuzeigen.

3. Sportausrüstung nach Anspruch 1 oder Anspruch 2, wobei das Messgerät (3) einen Verbindungs-Port umfasst, der den Anschluss einer Anzeige (4a) ermöglicht, die angepasst ist, um die für die Spannung des Spannseils (2) repräsentative Information anzuzeigen.

4. Sportausrüstung nach einem der vorstehenden Ansprüche, wobei das Messgerät (3) ein drahtloses Übertragungssystem der für die Spannung des Spannseils (2) repräsentativen Information zu einer Anzeige (4b) umfasst.

5. Sportausrüstung nach Anspruch 3 oder Anspruch 4, die eine Anzeige (4a, 4b) beinhaltet, die mit dem Messgerät kommuniziert, um die für die Spannung repräsentative Information anzuzeigen.

6. Sportausrüstung nach Anspruch 2 oder Anspruch 5, wobei die Anzeige (4, 4a, 4b) konfiguriert ist, um einen numerischen Wert der Spannung des Spannseils (2) bereitzustellen.

7. Sportausrüstung nach einem der vorstehenden Ansprüche, wobei das Messgerät (3) eine Datenspeichervorrichtung beinhaltet, die angepasst ist, um die für die Spannung des Spannseils (2) repräsentative Information zu speichern.

8. Sportausrüstung nach einem der vorstehenden Ansprüche, wobei das Messgerät (3) eine Warnvorrichtung umfasst, die angepasst ist, um ein Warnsignal auszugeben, wenn der Wert der Spannung des Spannseils (2) einen vordefinierten Bereich verlässt.

9. Sportausrüstung nach einem der vorstehenden Ansprüche, wobei das Messgerät (3) mindestens eine Batterie umfasst, die es ermöglicht, für dessen Betrieb zu sorgen, wobei das Messgerät (3) eine Leuchtdiode (5) umfasst, die angepasst ist, um den Zustand der mindestens einen Batterie anzuzeigen.

10. Sportausrüstung nach einem der vorstehenden Ansprüche, und die mehrere Spannseile (2), ein Messgerät (3) je Spannseil (2) beinhaltend, umfasst.

## Claims

1. A sports equipment comprising a cable (2) to which a mechanical tension is applied, and which ensures the stability or the rigidity of said sports equipment,
**characterised in that** it includes a measuring apparatus (3) which is fastened to said cable (2) so that the tension of the cable tension is applied thereto, said measuring apparatus (3) comprising:
- a sensor adapted to output an electrical signal corresponding to information representative of the tension of the cable; and
- a processing device adapted to read said electrical signal of the sensor so as to generate an output signal, the output signal being received by a display (4, 4a, 4b) integrated into or communicating with the measuring apparatus (3) and configured to indicate said information representative of the tension in the cable.

2. The sports equipment in accordance with claim 1, wherein the measuring apparatus (3) comprises a display (4) configured to indicate said information representative of the tension of the cable (2).

3. The sports equipment in accordance with claim 1 or claim 2, wherein the measuring apparatus (3) comprises a connection port enabling connection of a display (4a) adapted to indicate the information representative of the tension of the cable (2).

4. The sports equipment in accordance with one of the preceding claims, wherein the measuring apparatus (3) comprises a system for wireless transmission of the information representative of the tension of the cable (2) to a display (4b).

5. The sports equipment in accordance with claim 3 or claim 4, including a display (4a, 4b) communicating with the measuring apparatus so as to indicate the information representative of the tension.

6. The sports equipment in accordance with claim 2 or claim 5, wherein the display (4, 4a, 4b) is configured to provide a numerical value of the tension of the cable (2).

7. The sports equipment in accordance with one of the preceding claims, wherein said measuring apparatus (3) includes a data storage device adapted to store said information representative of the tension of the cable (2).

8. The sports equipment in accordance with one of the preceding claims, wherein said measuring apparatus (3) comprises a warning device adapted to emit a warning signal when the value of the tension of the cable (2) departs from a predefined range.

9. The sports equipment in accordance with one of the preceding claims, wherein the measuring apparatus (3) comprises at least one battery allowing ensuring operation thereof, the measuring apparatus (3) comprising a light-emitting diode (5) adapted to indicate the state of said at least one battery.

10. The sports equipment in accordance with one of the preceding claims and comprising several cables (2), including one measuring apparatus (3) for each cable (2).
